# EUROPÄISCHE PATENTSCHRIFT

(11) **EP 1 867 017 B1**
(45) Veröffentlichungstag und Bekanntmachung des Hinweises auf die Patenterteilung: **29.07.2015**
(21) Anmeldenummer: 06723739.6
(22) Anmeldetag: 25.03.2006
(51) Int. Cl.: H02B 1/20

(54) **ELEKTRISCHE SCHALTANLAGE**
ELECTRICAL SWITCHGEAR
INSTALLATION DE COMMUTATION ELECTRIQUE

(30) Priorität: 07.04.2005 DE 102005015943
(43) Veröffentlichungstag der Anmeldung: 19.12.2007
(73) Patentinhaber: ABB AG, 68309 Mannheim (DE)
(72) Erfinder: MERKEL, Hans-Peter, 69198 Schriesheim (DE); ZANK, Gunnar, 06179 Teutschenthal (DE)
(86) Internationale Anmeldenummer: PCT/EP2006/002761
(87) Internationale Veröffentlichungsnummer: WO 2006/105878

(56) Entgegenhaltungen:
- DE-U1- 8 915 073
- US-A- 4 602 313

## Beschreibung

Die Erfindung betrifft eine elektrische Schaltanlage mit wenigstens einem Schaltfeld, einem Sammelschienenraum, einem Verteilschienenraum und wenigstens einem Kabelraum.

Es sind elektrische Schaltanlagen bekannt geworden, die aus einem oder mehreren Schaltfeldern zusammengesetzt sind. Dabei befindet sich in jedem Schaltfeld eine Sammelschiene oder eine Sammelschienenanordnung, welche meist horizontal verläuft und an welche Verteilschienen anschließen, die die von den Sammelschienen gelieferte elektrische Energie an die einzelnen Geräte, Einschübe oder dergleichen innerhalb des Schaltfeldes verteilen.

Von den einzelnen Geräten verlaufen Leistungskabel zu den nachgeordneten Verbrauchern; darüber hinaus sind Steuer- und Signalkabel vorgesehen, mit denen elektrische Signale an sich innerhalb des Schaltfeldes befindende Schaltgeräte übertragen werden, sowie weitere Signalkabel, mit denen von den einzelnen Schalt- und Steuergeräten herkommende Signale an eine Zentrale übertragen werden. Diese Steuer- und Signalkabel können auch in Form einer Bussleitung ausgebildet sein.

Bei den bekannten Schaltanlagen ist neben dem Geräteraum, in dem sich die Schaft- und Steuergeräte befinden, ein Kabelraum vorgesehen, in dem sowohl die Leistungskabel als auch die Steuer- und Signalkabel verlegt sind. Hieraus ergeben sich Probleme bei der Leitungsführung von Leistungs- und Steuerkabeln, und darüber hinaus sind zur Erreichung bestimmter Normen (Form 4 b/7) technisch aufwendige Veränderungen an der bis jetzt bekannten Ausführung erforderlich.

Weitere Schaltanlagen sind aus US-A-4602313 und DE-8915073-U bekannt.

Aufgabe der Erfindung ist es, eine elektrische Schaltanlage mit wenigstens einem Schaltfeld zu schaffen, bei dem die Leitungsführung von Leistungs- und Steuerkabeln vereinfacht ist, ohne dass technisch aufwendige Veränderungen erforderlich sind.

Diese Aufgabe wird erfindungsgemäß gelöst durch die Merkmale des Anspruches 1.

Erfindungsgemäß also ist der Kabelraum für die Steuer- und Signalkabel (im folgenden kurz Steuerkabelraum genannt) auf einer Seite des Schaltfeldes und der Kabelraum für die Leistungskabel (im folgenden kurz Leistungskabelraum genannt) auf der anderen Seite des Schaltfeldes angeordnet.

Damit ist eine optimale Trennung des Steuerkabelraums und des Leistungskabelraums erzeugt; die Trennung erfolgt über den Geräteraum.

Wenn zwei Schaltfelder oder mehr nebeneinander angeordnet sind, dann grenzt der Steuerkabelraum eines Schaltfeldes an den Leistungskabelraum des anderen Schaltfeldes; beide bilden zunächst einen gemeinsamen Kabelraum, in dem dann die einzelnen Kabel getrennt voneinander verlegt werden können. Nach Beendigung der Montage und der Verlegung der Kabel werden die nebeneinander liegenden Steuer- und Leistungskabelräume mittels einer einschiebbaren Trennwand voneinander getrennt, so dass einerseits eine gegenseitige Beeinflussung nicht erfolgt, was natürlich auch für die Steuer- und Leistungskabelräume eines Schaltfeldes gilt. Die nach der Verkabelung bzw. Verlegung der Kabel eingeschobene Trennwand ist dann die seitliche Begrenzungswand eines Schaltfeldes.

Weitere vorteilhafte Ausgestaltungen und Verbesserungen der Erfindung sind den weiteren Unteransprüchen zu entnehmen.

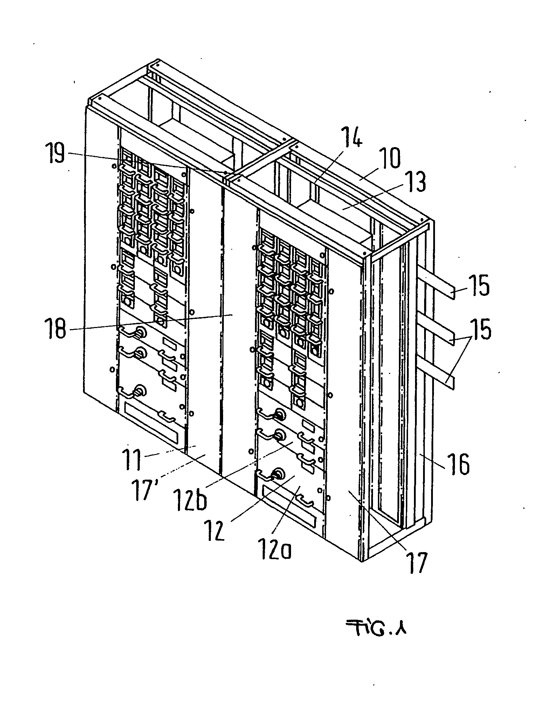

Anhand der Zeichnung, in der ein Ausführungsbeispiel der Erfindung dargestellt ist, sollen die Erfindung sowie weitere vorteilhafte Ausgestaltungen und Verbesserungen der Erfindung und weitere Vorteile näher erläutert und beschrieben werden.

Es zeigt:
- Einzige Fig.: eine perspektivische Ansicht einer Schaltanlage, in schematischer Darstellung.

Die Schaltanlage besitzt ein erstes Schaltfeld 10, an den ein nur teilweise dargestelltes zweites Schaltfeld 11 angeschlossen ist. In dem Schaltfeld 10 befinden sich ein Geräteraum 12, in dem Schalt- und Steuergeräte untergebracht sind, die in unterschiedlich großen Einschüben 12a, 12b eingebaut sein können. Hinter dem Geräteraum 12, durch eine Trennwand 13 angetrennt schließt sich ein Verteilschienenraum 14 an, in dem vertikal verlaufende Verteilschienen angeordnet sind, die mit Sammelschienen 15 elektrisch leitend verbunden sind, die in einem Sammelschienenraum 16 untergebracht sind. Von den Geräten 12 sind Abgangskabel (nicht dargestellt), und Leistungskabel in einen Leistungskabelraum 17 verlegt, von wo aus sie zu hinter dem Schaltfeld angeordneten Motoren und sonstigen Verbrauchern geleitet sind. Dieser Kabelraum 17 liegt rechts vom Geräteraum 12 des Schaltfeldes 10. Links von diesem Geräteraum 12 befindet sich ein Kabelführungsraum 18, in dem Signalkabel und Steuerkabel sowie eine Busleitung untergebracht sind, mit denen Steuersignale zu und beispielsweise Zustandssignale zu den Geräten in den einzlnen Einschüben geleitet werden.

Wenn zwei Schaltfelder 10 und 11 nebeneinander angeordnet sind, dann liegt der Leistungskabelraum 17' des Schaltfeldes 11 neben dem Steuerkabelraum 18 des Schaltfeldes 10; zur Montage und Verlegung der Leistungs- und Steuerkabel können, wie hier der Fall, beide Kabelräume 17' und 18 einen einheitlichen Raum bilden, was für die Verlegung eine Montagevereinfachung bedeutet; nach Beendigung der Verlegung der Kabel kann zwischen dem Leistungskabelraum 17' und dem Steuerkabelraum 18 eine Trennwand 19 eingeschoben werden, wodurch eine Trennung der beiden Kabelräume erreicht ist.

Es besteht natürlich auch die möglichkeit, die Leistungskabel durch die Rückwand aus dem Schaltfeld herauszuführen.

Die Trennwand bietet somit eine mechanische und elektrische Trennung der Leistungs- und Steuerkabelräume.

## Patentansprüche

1. Elektrische Schaltanlage mit wenigstens einem Schaltfeld (10, 11), insbesondere für Niederspannung, mit einem Geräteraum (12) insbesondere zur Aufnahme von Einschüben (12a, 12b), Schalt- und Steuergeräten und dergleichen, mit einem Sammelschienenraum (16), in dem die Sammelschienen (15) horizontal verlaufend untergebracht sind, mit einem Verteilschienenraum (14), in dem die Verteilschienen vertikal verlaufen, und mit wenigstens einem Kabelraum (17, 18), wobei
∘ wenigstens zwei nebeneinander angeordnete Schaltfelder (10, 11) vorgesehen sind, von denen jedes mit wenigstens einem Kabelraum für Leistungs-, Steuer- und Signalkabel versehen ist,
∘ sich der Kabelraum (18) für Steuer- und Signalkabel auf einer Seite des Schaltfeldes (10, 11) und der Kabelraum (17) für Leistungskabel auf der anderen Seite des Schaltfeldes (10, 11) befinden,
∘ die nebeneinander liegenden Kabelräume (17, 18) für Steuer- und Signalkabel und für Leistungskabel nach der Montage und Verlegung der Kabel mittels einer einschiebbaren Trennwand voneinander trennbar sind und
∘ der Verteilschienenraum unmittelbar anschließend an den Sammelschienenraum vorgesehen ist.

## Claims

1. Electrical switchgear assembly having at least one switchpanel (10,11), in particular for low voltages, having a device area (12) in particular for accommodating withdrawable parts (12a, 12b), switching devices and control devices and the like, having a busbar area (16), in which the busbars (15) are accommodated running horizontally, having a distribution busbar area (14), in which the distribution busbars run vertically, and having at least one cable area (17, 18),wherein
• at least two switchpanels (10, 11) arranged next to one another are provided, each of which is equipped with at least one cable area for power, control and signal cables,
• the cable area (18) for control and signal cables is located on one side of the switchpanel (10, 11) and the cable area (17) for power cables is located on the other side of the switchpanel (10, 11)
• the adjacent cable areas (17, 18) for control and signal cables and for power cables can be isolated from one another by means of an insertable partition wall once the cables have been installed and laid and
• the distribution busbar area is provided directly adjacent to the busbar area.

## Revendications

1. Équipement de commutation électrique comprenant au moins un tableau de distribution (10, 11), notamment pour la basse tension, comprenant un espace pour appareil (12), servant notamment à accueillir des modules insérables (12a, 12b), des appareillages de commutation et de commande et similaires, comprenant un espace pour barres-bus (16) dans lequel sont logées les barres-bus (15) en s'étendant horizontalement, comprenant un espace pour rails de distribution (14) dans lequel les rails de distribution s'étendent verticalement, et comprenant au moins un espace à câbles (17, 18),
* au moins deux tableaux de distribution (10, 11) disposés l'un à côté de l'autre étant prévus, chacun étant muni d'au moins un espace à câbles pour des câbles de puissance, de commande et de signal,
* le espace à câbles (18) pour les câbles de commande et de signal se trouvant d'un côté du tableau de distribution (10, 11) et le espace à câbles (17) pour les câbles de puissance se trouvant de l'autre côté du tableau de distribution (10, 11),
* l'espaces à câbles (17, 18) disposés l'un à côté de l'autre pour les câbles de commande et de signal et pour les câbles de puissance pouvant être séparés l'un de l'autre au moyen d'une paroi de séparation insérable après le montage et la pose des câbles et
* l'espace pour rails de distribution étant prévu relié directement à l'espace pour barres-bus.
